# EUROPEAN PATENT SPECIFICATION

(11) **EP 1 573 978 B1**
(45) Date of publication and mention of the grant of the patent: **26.05.2010**
(21) Application number: 03768709.2
(22) Date of filing: 06.11.2003
(51) Int. Cl.: H04L 12/56

(54) **SYSTEM AND METHOD FOR PROGRAMMING HYPER TRANSPORT ROUTING TABLES ON MULTIPROCESSOR SYSTEMS**
SYSTEM UND VERFAHREN ZUR PROGRAMMIERUNG DER HYPERDATENTRANSPORTLEITWEGLENKUNGSTABELLE IN MULTIPROZESSORSYSTEMEN
SYSTEME ET PROCEDE POUR LA PROGRAMMATION DE TABLES DE ROUTAGE D'HYPER-TRANSPORT SUR DES SYSTEMES MULTIPROCESSEURS

(30) Priority: 19.12.2002 US 326425
(43) Date of publication of application: 14.09.2005
(73) Proprietor: ADVANCED MICRO DEVICES, INC., Sunnyvale CA 94088-3453 (US)
(72) Inventor: KECK, David, A., Georgetown, TX 78626 (US); DEVRIENDT, Paul, Austin, TX 78747 (US)
(74) Representative: Brookes Batchellor LLP
(86) International application number: PCT/US2003/035331
(87) International publication number: WO 2004/062209

(56) References cited:
- US-A- 6 158 000
- US-A1- 2002 103 995
- US-B1- 6 233 641

## Description

### BACKGROUND

### Field of the Invention

The present application relates to topology management in multiprocessor computer systems, particularly to dynamic programming of hyper transport routing tables in the multiprocessor computer systems.

### Description of the Related Art

US-A-2002/0103995 discloses a system and method of initializing the fabric of a distributed multiprocessor computer system. Packet routing tables are defined during the initialization of the processing subsystem fabric, and are provided in each processing device for packet routing. Initialization of the system begins with cold reset, after which all routing tables are set to default values.

Generally, in multiprocessor computer systems, individual processors and peripheral devices are coupled via Hyper Transport (HT) technology input/output links. HT link is a packetized local bus that allows high speed data transfer between devices resulting in high throughput.

In HT links, address, data and commands are sent along the same wires using information "packets". The information packets contain device information to identify the source and destination of the packet. Each device (e.g., processor and the like) in the computer system refers to a Hyper-Transport table to determine the routing of a packet. HT tables maintain system configuration information such as system topology (e.g., processor interconnect architecture, or routing information). When a first device (e.g., a processor or the like) receives a packet, the first devices determines whether the packet is for the first device itself or for some other device in the system. If the packet is for the first device itself, the first device processes the packet and if the packet is destined for another device, the first device looks up the HT tables for the destination routing of the packet and determines which HT links to uses forward the packet to its destination and forwards the packet on appropriate HT links to its destination.

These HT links are configured during system initialization. The initialization software (e.g., BIOS or the like) configures the computer system during boot-up process. The initialization software creates the necessary data structures for the operating system, initializes the system hardware components, sets hardware configuration registers, and configures the control of platform components. HT tables are programmed by initialization software upon boot and used by all the devices until the system is reinitialized. To maintain system integrity, once the HT tables are initialized, they are not modified by any system software (e.g, operating system, applications or the like).

However, when a system error related to HT links occurs (e.g., high error rate on a link, failure of a link, failure of a device on a link or the like), the system must be reinitialized to rebuild the HT tables. For example, when a HT link fails, and an alternate route is not available, the system fails. Similarly, if a device (e.g., processor, memory or the like) fails, the system must be powered down to replace the device. Powering down and reinitialization of the system can result in the loss of critical data and productivity. Thus, a system and method is needed to dynamically program the HT tables in a multiprocessor system.

### SUMMARY

In some embodiments, a system and method of dynamically programming HT tables in multiprocessor systems are provided. In some variations, HT tables are dynamically reprogrammed to modify the topology of the multiprocessor system for fault adjustment, diagnostic, performance analysis, processor hot plugging and the like. In some embodiments, HT links can be isolated by reconfiguring the HT tables which allows diagnostics on the isolated HT links. In some variations, HT links can be reconfigured to route packet traffic on certain links which allows the performance measurement for the HT links. In some embodiments, HT tables can be reconfigure to isolate a processor so that the processor can be replaced without taking the entire system down.

The present application describes a method in connection with multiprocessor system. The method includes at least, partially stalling execution of one or more system activities and dynamically modifying one or more routing tables on one or more processors. In some variations, each one of the routing tables representing routing destination for an incoming data packet. In some embodiments, the routing destination is the one or more processors. In some variations, the method includes using the modified routing tables to direct forwarding of the incoming packet to at least one predetermined outgoing link in the multiprocessor system.

In some embodiments, the method includes stalling the system activities after completion of any pending operation. In some variations, the method includes identifying at least one substitute memory, transferring data from a first memory to the substitute memory and updating a memory mapping. In some variations, the method includes identifying at least one substitute input/output link, transferring input/output data to the substitute input/output link updating an input/output map. In some embodiments, the method includes disabling a first processor coupled to the first memory and replacing the first processor. In some variations, the disabling the first processor includes one or more of suspending all processes running on the first processor and removing power from the first processor.

In some variations, the method includes resuming the execution of the one or more system activities. In some embodiments, the method includes identifying at least one link for testing and testing the identified link. In some embodiments, the testing is performed for one or more of diagnostic, fault adjustment, maintenance and performance measurement. In some variations, the method includes stalling the one or more system activities restoring the one or more routing tables on the one or more processors and resuming the execution of the one or more system activities. In some embodiments, the restoring the routing tables include modifying the routing tables based on results of the testing.

The foregoing is a summary and thus contains, by necessity, simplifications, generalizations and omissions of detail; consequently, those skilled in the art will appreciate that the summary is illustrative only and is not intended to be in any way limiting. As will also be apparent to one of skill in the art, the operations disclosed herein may be implemented in a number of ways, and such changes and modifications may be made without departing from this invention and its broader aspects. Other aspects, inventive features, and advantages of the present invention, as defined solely by the claims, will become apparent in the non-limiting detailed description set forth below.

### BRIEF DESCRIPTION OF THE DRAWINGS

The present invention may be better understood, and its numerous objects, features, and advantages made apparent to those skilled in the art by referencing the accompanying drawings.

**Fig. 1A** illustrates an exemplary system 100 according to an embodiment of the present invention.

**Fig. 1B** illustrates an exemplary processing node of system 100 according to an embodiment of the present invention.

**Fig. 2** illustrates an exemplary configuration of a routing table 200 according to an embodiment of the present invention.

**Fig. 3** is a flow diagram illustrating an exemplary sequence of operations performed during a process of dynamic fault adjustment according to an embodiment of the present invention.

**Fig. 4** is a flow diagram illustrating an exemplary sequence of operations performed during a process of dynamically testing HT links according to an embodiment of the present invention.

The use of the same reference symbols in different drawings indicates similar or identical items.

### DESCRIPTION OF THE PREFERRED EMBODIMENT(S)

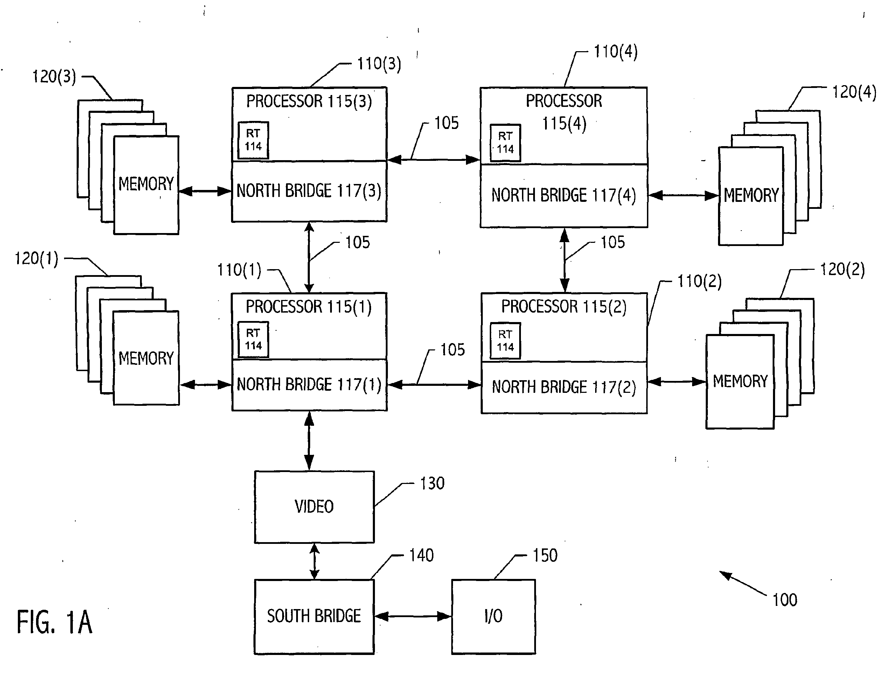

Fig. 1A illustrates an exemplary system 100 according to an embodiment of the present invention. System 100 is a multiprocessor system with multiple processing nodes 110(1)-(4) that communicate with each other via links 105. Each of processing nodes includes a processor 115(1)-(4), routing tables 114 and north bridge circuitry 117(1)-(4). While for purposes of illustrations, in the present example, four processing nodes are shown however one skilled in the art will appreciate that system 100 can include any number of processing nodes. Links 105 can be any links. In the present example, links 105 are dual point to point links according to, for example, a split-transaction bus protocol such as the HyperTransport^{™} (HT) protocol. Links 105 can include a downstream data flow and an upstream data flow. Link signals typically include link traffic such as clock, control, command, address and data information and link sideband signals that qualify and synchronize the traffic flowing between devices.

Routing tables 114 provide the configuration of the system architecture (e.g., system topology or the like). Routing tables 114 are used by processing nodes 110 to determine the routing of data (e.g., data generated by the node for other processing nodes or received from other nodes). Each one of north bridges communicates with respective ones of a memory array 120(1)-(4). In the present example, the processing nodes 110 (1)-(4) and corresponding memory arrays 120 (1)-(4) are in a "coherent" portion of system 100. The coherency refers to the caching of memory, and the HT links between processors are cHT links as the HT protocol includes messages for managing the cache protocol. Other (non processor-processor) HT links are ncHT links, as they do not have memory cache. A video device 130 can be coupled to one of the processing nodes 110 via another HT link. Video device 130 can be coupled to a south bridge 140 via another HT link. One or more I/O devices 150 can be coupled to south bridge 140. In the present example, Video device 130, south bridge 140 and I/O devices 150 are in a "non-coherent" portion of the system. One skilled in the art will appreciate that system 100 can be more complex than shown, for example, additional processing nodes 110 can make up the coherent portion of the system. Additionally, although processing nodes 110 are illustrated in a "ladder architecture," processing nodes 110 can be interconnected in a variety of ways (e.g., star, mesh and the like) and can have more complex couplings.

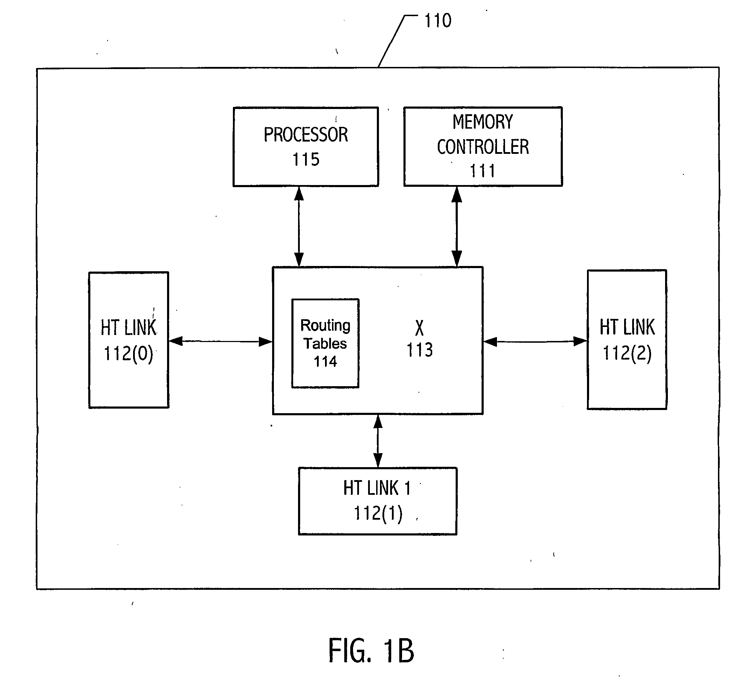

Fig. 1B illustrates an exemplary processing node of system 100 according to an embodiment of the present invention. Processing node 110 includes a processor 115, multiple HT link interfaces 112 (0)-(2) and a memory controller 111. Each HT link interface provides coupling with a corresponding HT link for communication with a device coupled on the HT link. Memory controller 111 provides memory interface and management for corresponding memory array 110 (not shown). A crossbar 113 transfers requests, responses and broadcast messages such as received from other processing nodes or generated by processor 115, to processor 115 and/or to the appropriate HT link interface(s) 112 respectively. The transfer of requests, responses and broadcast messages is directed by multiple configuration routing tables 114 located in each processing node 110. In the present example, routing tables 114 are included in crossbar 113 however, routing tables 114 can be configured anywhere in the processing node 110 (e.g., in memory, internal storage of the processor, externally addressable database or the like). One skilled in the art will appreciate that processing node 110 can include other processing elements (e.g., redundant HT link interfaces, various peripheral elements needed for processor and memory controller or the like).

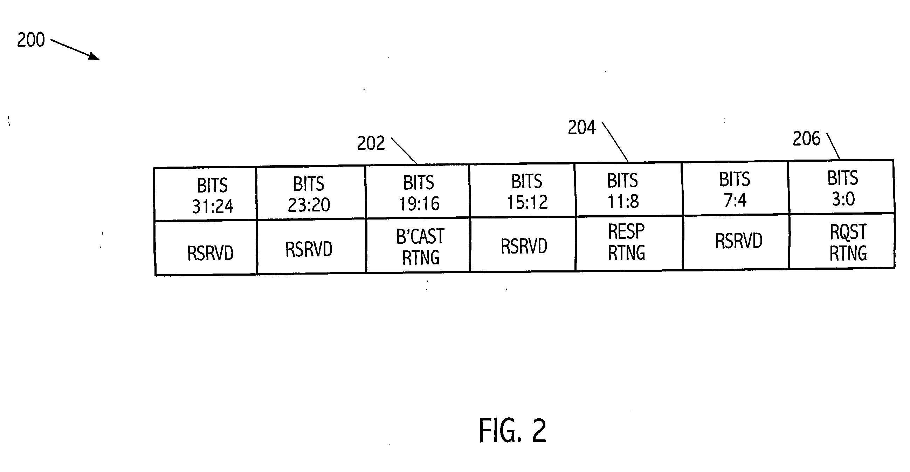

Fig. 2 illustrates an exemplary configuration of a routing table 200 according to an embodiment of the present invention. Processing nodes can include multiple configuration routing tables 200. For purposes of illustrations, in the present example, a 32 bit table is shown. However, one skilled in the art will appreciate that routing tables can be configured using any number of bits and each bit in the routing table can be designated as required by a particular application.

In the present example, routing table 200 includes three entries: broadcast routing information 202, response routing information 204 and request routing information 206. For purposes of illustrations, each set of routing related information has one bit for each HT link (e.g., HT link 112(0)-(2) or the like) and one bit for the processing node itself. One routing table is assigned to each processing node, for example, in an eight processing node system each processing node has eight configuration routing tables. Table entries can be read and written, and are typically not persistent. The entries in the routing table can be programmed using any convention for example, a value of 01h can indicate that a packet received on the corresponding link must be accepted by the receiving processor and a value of 00h can indicate that the packet must be forwarded to appropriate link or vise versa.

Request routing information 206 is used with directed requests. The value indicates which outgoing link is used for request packets directed to that particular destination node. For example, a one in a given bit position can indicate that the request is routed through the corresponding HT link. The least significant bit, when set to one, can indicate that the request is to be sent to the processor of the receiving processing node. Request routing information field 206 indicates which link can be used to forward a request packet. Request packets are typically routed to only one destination and the routing table is indexed (searched) using the destination node identifier in the request routing information field of the request packet. For example, the bits in the request routing information field of the request packet can be configured as Bit[0] - route to receiving node, Bit[1] - route to HT link 0, Bit[2] - route to HT link 1 and Bit[3] - route to HT link 2 or the like. One skilled in the art will appreciate the routing tables can be configured in various ways to reflect the topology of the multiprocessor system For example, complicated routing schemes can be implemented using a combination of routing table matrix or the crossbar 113 can be configured to further process and modify incoming packets for appropriate routing in the system and the like.

Response routing information 204 is used for responses to a previously received request packet. The value in each entry represents the outgoing HT link to be used to direct a particular response packet to its destination node. Response routing information field 204 represents the node or link to which a response packet is forwarded. Response packets are typically routed to only one destination and the routing table is indexed using the destination node identifier in the response packet. For example, a one in a given bit position can indicate that the response is routed through the corresponding output link and a zero can indicate that the response is to be sent to the processor of this processing node. In a four processing node system, the bits can be configured as Bit[0] - route to this node, Bit[1] - route to HT link 0, Bit[2] -route to HT link 1 and Bit[3] - route to HT link 2 or the like.

Broadcast routing information 202 is used with data packet of type broadcast and probe. Generally, broadcast and probe data packets are forwarded to every processing node in the system. For example, a processing node can use a broadcast packet to communicate information to all the nodes in the system and send a probe packet to inquire about the status (e.g., memory availability, processing capability, links status or the like) of each processing node. Each entry can contain a single bit for each of the HT links coupled to the node. For example, in a four link system, four bits can be assigned to represent each link. Alternatively, two bits can be assigned to represent each link in a binary form. One skilled in the art will appreciate that any scheme can be configured to represent links in the system. The packet can be forwarded on all links if the corresponding bits are set accordingly. For example, Bit zero, when set to one, can indicate that the broadcast is to be sent to the processor of receiving processing node. Broadcast routing information field indicates the node or link(s) to which a broadcast packet is forwarded. Broadcasts can be routed to more than one destination. A node ID in the source field of the incoming packet can index into the routing table and indicate the node identifier. For example, Bit[0] - route to this node, Bit[1] - route to HT link 0, Bit[2] - route to HT link 1 and Bit[3] - route to HT link 2 or the like.

When a request is received by a processing node, the corresponding north bridge of the processing node looks at its destination identifier to determine which node is the destination of the request and forwards the packet accordingly. One skilled in the art will appreciate that while one 32-bit entry is described here, the routing tables can be configured using various combinations of fields. For example, individual routing tables can be defined based on the type of data packet (e.g., request, response, broadcast or the like) so when a data packet is received by a processing node, the processing node can refer to appropriate routing table according to the type of the data packet. Similarly, various combinations of bits and routing tables can be used to configure different and possibly more complex routing schemes for the system.

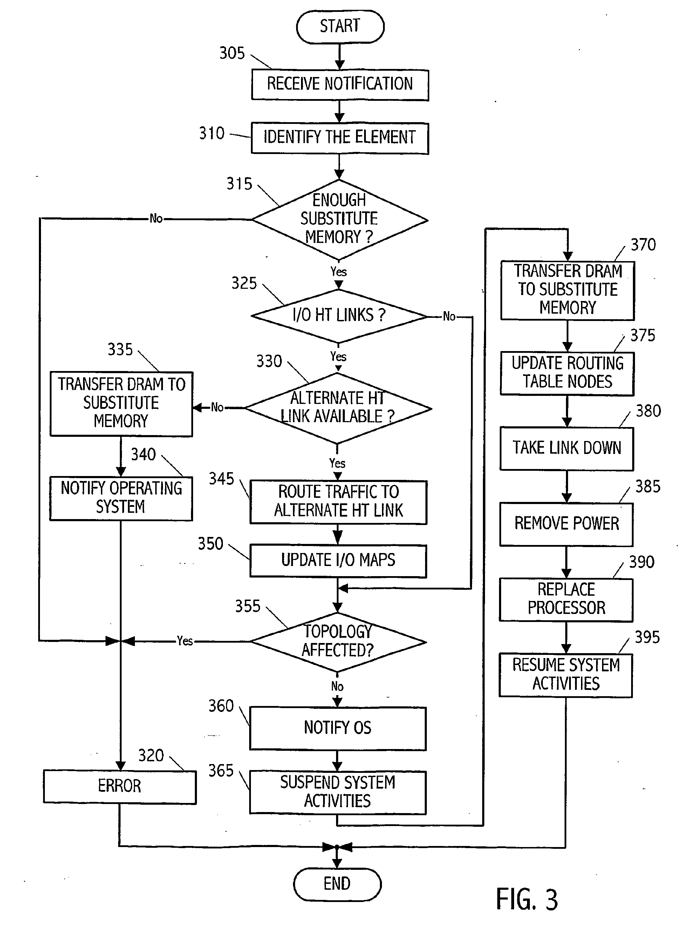

Fig. 3 is a flow diagram illustrating an exemplary sequence of operations performed during a process of dynamic fault adjustment according to an embodiment of the present invention. While the operations are described in a particular order, the operations described herein can be performed in other sequential orders (or in parallel) as long as dependencies between operations allow. In general, a particular sequence of operations is a matter of design choice and a variety of sequences can be appreciated by persons of skill in the art based on the description herein.

Initially, a notification regarding a device (e.g., processor, link or the like) is received (305). The notification can be received by a software routine (e.g., a driver, system application or the like) executing on a computer system. One skilled in the art will appreciate the software routine can be executed by the processor as resident software in the system memory or can be executed upon issuance of command (e.g., by a user application, system call, manual command or the like). The notification can be an error message (e.g., processor/link failure, memory array error or the like) reported by the system or a manual command entered by a user. The notification can also be integrated into a user application executing on the system. After the notification is received the process identifies the failing device (310). The device identification can be part of the notification. The failing device can be identified using a unique device identification assigned by the system or any other means used by the system to address the device during the operation. For purposes of illustrations, in the present example, the device is one of several processors in the multiprocessor system. One skilled in the art will appreciate that the process can be executed for any other device in the system.

When the device is a processor, the process determines whether enough substitute memory is available with other processors to remap the memory of the failing processor (315). If other processors do not have enough spare memory to substitute for failing processor's memory, the process generates appropriate errors (320). When enough memory is not available to replace the memory of the failing processor, the system may be required to power down. If enough memory is available at the other processors, the process determines whether input/output (I/O) HT links are coupled to the failing processor (325). Typically in multiprocessor systems, I/O devices are coupled to any one of the processors for example, processors 115(1) as shown in figure 1. If the I/O devices are coupled to the failing processor then the I/O links needs to be reassigned so that the other processors can continue to communicate with the I/O devices when the failing processor is down. If there are no input/output HT links coupled to the failing processor, the process proceeds to determine the topology impacts (355).

If input/output HT links are coupled to the failing processors, the processor first determines whether substitute HT links are available to route I/O traffic on the substitute links (330). In multiprocessor systems, alternate redundant HT links can be configured to improve system reliability. If alternate I/O HT links are not available then the process transfers the local DRAM of the failing processor to alternate memory identified in 315 (335). The transfer of local DRAM requires update of DRAM mapping of the system so if a devices attempts to access the storage in the DRAM of the failing processor then the requests can be forwarded to appropriate alternate locations.

The operating system is notified of the appropriate changes (340). One skilled in the art will appreciate that the notification to the operating system can be operating system specific. For example, in some applications, the remapping of memory can be transparent to the operating system and in other cases operating system may need to know if a processor goes offline. In case of a redundant processor, the replacement of the processor can be transparent to the operating system. If the failing processor is the only processor coupled to the I/O HT links, then the failing processor cannot be taken offline. The process generates appropriate errors (320). The error message informs the process initiating entity (e.g., user application, manual command by the user, operating system or the like) that the processor cannot be taken offline because of the I/O links.

If the alternate HT links are available, the process routes the I/O traffic to appropriate alternate I/O HT links (345). The routing of HT I/O links to alternate links may require updating the routing tables and/or the I/O mapping of the system. The process updates the I/O mapping (350). Generally, if the alternate routing links are available in the system, the alternate route is programmed by the initializing software (e.g., BIOS or the like) in the routing tables. The process determines whether by taking the failing processor offline, the topology of the system will be affected (355). The topology of system may get affected when by taking a processor offline might isolate another processor. For example, in a four-way processor architecture (e.g., shown in figure 1), there are two paths to each processor so if two adjacent processors are taken offline then the other processor can still communicate with each other however, if two alternate processors are taken offline (e.g., processors 115(1) and 115(4) as shown in figure 1) then the remaining processors have no way to communicate with each other. One skilled in the art will appreciate that the topology impacts can be architecture specific (e.g., ladder, mesh, star or the like).

If by taking the failing processor offline, the topology of the multiprocessor system is affected then the process generates appropriate error messages (320). In such cases, the failing processor cannot be taken offline. If the topology of the system is not affected then the process notifies the operating system that the failing processor is no longer available for service (360). The process suspends (or stalls) system activities to a safe point (365). The suspension (stalling) of system activities may involve completion of in-flight transactions. For example, if a memory read has started then it must be allowed to complete before suspending the process. The processor caches are also flushed. One skilled in the art will appreciate that the system activities can be suspended (or stalled) using various methods. For example, if the operating system of the computer system is configured with appropriate commands then the operating system commands can be executed. Alternatively, each processor can suspend execution or delay the execution of current thread by entering into a suspend mode (e.g., executing a suspend instruction, executing a suspend interrupt routine or the like). Similarly, various other devices (e.g., bus masters, graphics controllers or the like) can also be controlled to suspend corresponding activities.

The process transfers the DRAM of the failing processor to alternate memory identified in 315 (370). The transfer of local DRAM requires update of DRAM mapping of the system so if a devices attempts to access the storage in the DRAM of the failing processor then the requests can be forwarded to appropriate alternate locations. The process updates the routing tables (375). The routing tables are updated dynamically to reroute all the traffic, initially destined for the failing processor, to alternate links and the processors. For example, referring to figure 1A, if processor 115(1) is the failing processor then processor 115(2) can communicate processor 115(3) through processor 115(4). The routing tables of processor 115(2) are modified to remove processor 115(1) as an available route to processor 115(3). Similarly, the routing tables of the other processors are modified appropriately to reflect the change in the processor network. The routing tables can be reconfigured by calling the specific appropriate routines of the initialization software (e.g., BIOS or the like) or the routing tables reconfiguration routines can be integrated into the software driver that executes the process of isolating the failing processor. One skilled in the art will appreciate that the routing tables can be reconfigured using various means according the system architecture.

Once the routing tables are updated, the links to the failing processor can be taken down (380). The links can be taken down by disabling the appropriate link interfaces in the processing nodes. When links are updated in the routing tables, the appropriate I/O mappings can also be adjusted to reflect the change in the links. The I/O mappings can be system configuration specific (e.g., PCI based standard configuration or the like). The process then removes the power to the failing processor (385). Once the power is removed from the processor the processor can be replaced physically (390). After the failing processor is replaced with a new processor, the system activities can be resumed (395). The system activities can be resumed using various interrupts and commands for example, if the processor is in a suspend interrupt routine then a change in the architecture can be detected by a manual interrupt generated after the replacement of the failing processor. Similarly, if the process is manually initiated then a manual command input can resume the system activities.

When the system activities are resumed, the software driver that isolated the failing processor can rebuild the routing tables by calling the appropriate routines (e.g., executing routines by itself, calling BIOS routines or the like). The rebuilding of the routing tables can configure the replaced processor into the system topology. One skilled in the art will appreciate that the system activities can be resumed without replacing the failing processor. In such case, the system can run with reduced capacity (e.g., processing power, memory or the like). Further, while the system is running without the failing processor, diagnostics can be run to determine the cause of failure for the failing processor.

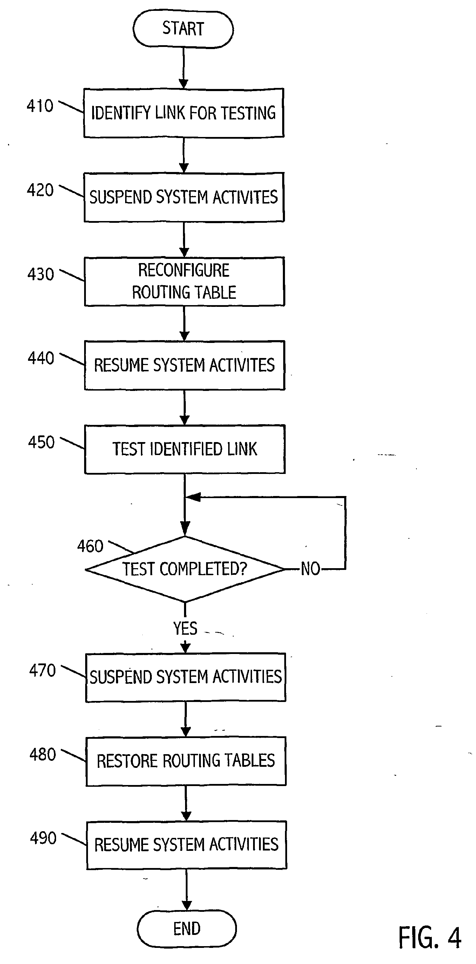

Fig. 4 is a flow diagram illustrating an exemplary sequence of operations performed during a process of dynamically testing HT links according to an embodiment of the present invention. While the operations are described in a particular order, the operations described herein can be performed in other sequential orders (or in parallel) as long as dependencies between operations allow. In general, a particular sequence of operations is a matter of design choice and a variety of sequences can be appreciated by persons of skill in the art based on the description herein.

Initially, one or more HT links are identified for testing (410). HT links carry information between various devices (e.g., processor, memory, various controllers or the like). These links can be tested for various system related functions (e.g., diagnostic, performance evaluation or the like). For example, if the system is generating error messages for a particular link then it may be desired to run predetermined diagnostics on that particular link. Similarly, occasionally, the links can be tested to determine the performance of the link and the devices coupled to that link. One skilled in the art will appreciate that HT links can be monitored and tested for various application specific purposes.

The diagnostic and test software can run on any processor in a multiprocessor system. Generally, in a multiprocessor system, one of the processors is designated as the 'host' processor. The host processor typically performs system related administrative functions (e.g., diagnostics or the like). The diagnostic software is typically resident on the host processor (e.g., in the local storage or the like). However, one skilled in the art will appreciate that system administrative functions can be distributed and shared among various processors. When a diagnostic routine is executed on the host processor (e.g., via user application, routine system calls, manual initiation by a user, execution of a software driver routing or the like), the testing parameters (e.g., data rate, speed, timing, throughput and the like) are predetermined. For example, a link can be tested for simultaneously handling the traffic for more than two processors and the like.

The system activities are suspended to a safe execution point (420). For example, if a memory read operation is in progress then the read operation is allowed to complete before the memory read process is suspended. The system activities can be partially suspended for the link under test and unrelated activities can be allowed to continue. For example, if a link between two processors is being tested then only the activities for that particular processor can be suspended and local activities (e.g., read/write to local storage or the like) can continue. However, some of the testing may require for local traffic to travel the long route through the link under test so the throughput of that link can be tested. In such cases, even the local activities can be suspended. For example, referring to fig. 1A, if the link between processor 115(1) and processor 115(2) is being tested then the communication between processor 115(1) and processor 115(3) can be forced to be routed via processors 115(4) and 115(2) which allows additional traffic on link between processors 115(1) and 115(2) for testing and performance evaluation.

When appropriate system activities are suspended, the process reconfigures the routing tables (430). The routing tables are reconfigured to force traffic on or away from a link under test. The reconfiguration of the tables may also require reconfiguration of memory and I/O maps depending upon the topology of the system. If the memory and I/O mapping is required then memory and I/O maps are modified accordingly to facilitate the testing of the particular link. The system activities are then resumed for normal operation (440). During the normal operation under new routing configuration, the links and devices are tested (e.g., for diagnostic, fault evaluation, performance measurement or the like) (450). The process continues to determine whether the testing has been completed (460).

When the testing completes, the process suspends system activities (470). The routing tables are restored (480). The routing tables can be restored to the original settings before the testing or can be updated based on the results of the testing. For example, if the testing determines that certain data in a memory is accessed frequently and causes congestion on associated link for other traffic then the memory mapping can be updated to release congestion on that particular link. One skilled in the art will appreciate that the routing tables can be updated according to the system topology and particular applications. The process resumes the system activities (490). While a testing process is described, one skilled in the art will appreciate that the process can be used for performance analysis purpose. For example, the links can be reconfigured by dynamically modifying the routing tables to direct the data flow to a particular processor or link which can be monitored by a performance analysis application. The performance analysis application can analyze the data flow to make appropriate measurements. Similarly, the process can be used for various applications requiring dynamic modification of routing tables.

The above description is intended to describe at least one embodiment of the invention. The above description is not intended to define the scope of the invention. Rather, the scope of the invention is defined in the claims below. Thus, other embodiments of the invention include other variations, modifications, additions, and/or improvements to the above description.

For example, those skilled in the art will recognize that boundaries between the functionality of the above described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

The operations discussed herein may consist of steps carried out by system users, hardware modules and/or software modules. In other embodiments, the operations of Figures 1-4 for example, are directly or indirectly representative of software modules resident on a computer readable medium and/or resident within a computer system and/or transmitted to the computer system as part of a computer program product.

The above described method, the operations thereof and modules therefore may be executed on a computer system configured to execute the operations of the method and/or may be executed from computer-readable media. Computer systems may be found in many forms including but not limited to mainframes, minicomputers, servers, workstations, personal computers, notepads, personal digital assistants, various wireless devices and embedded systems, just to name a few. A typical computer system includes at least one processing unit, associated memory and a number of input/output (I/O) devices. A computer system processes information according to a program and produces resultant output information via I/O devices. A program is a list of instructions such as a particular application program and/or an operating system. A computer program is typically stored internally on computer readable storage media or transmitted to the computer system via a computer readable transmission medium. A computer process typically includes an executing (running) program or portion of a program, current program values and state information, and the resources used by the operating system to manage the execution of the process. A parent computer process may spawn other, child processes to help perform the overall functionality of the parent process. Because the parent process specifically spawns the child processes to perform a portion of the overall functionality of the parent process, the functions performed by child processes (and grandchild processes, etc.) may sometimes be described as being performed by the parent process.

The method described above may be embodied in a computer-readable medium for configuring a computer system to execute the method. The computer readable media may be permanently, removably or remotely coupled to system 100 or another system. The computer readable media may include, for example and without limitation, any number of the following: magnetic storage media including disk and tape storage media; optical storage media such as compact disk media (e.g., CD-ROM, CD-R, etc.) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, etc.; and data transmission media including permanent and intermittent computer networks, point-to-point telecommunication equipment, carrier wave transmission media, the Internet, just to name a few. Other new and various types of computer-readable media may be used to store and/or transmit the software modules discussed herein.

It is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality.

Because the above detailed description is exemplary, when "one embodiment" is described, it is an exemplary embodiment. Accordingly, the use of the word "one" in this context is not intended to indicate that one and only one embodiment may have a described feature. Rather, many other-embodiments may, and often do, have the described feature of the exemplary "one embodiment." Thus, as used above, when the invention is described in the context of one embodiment, that one embodiment is one of many possible embodiments of the invention.

While particular embodiments of the present invention have been shown and described, it will be clear to those skilled in the art that, based upon the teachings herein, various modifications, alternative constructions, and equivalents may be used without departing from the invention claimed herein. Consequently, the appended claims encompass within their scope all such changes, modifications, etc. as are within the scope of the invention. Furthermore, it is to be understood that the invention is solely defined by the appended claims. The above description is not intended to present an exhaustive list of embodiments of the invention. Unless expressly stated otherwise, each example presented herein is a nonlimiting or nonexclusive example, whether or not the terms nonlimiting, nonexclusive or similar terms are contemporaneously expressed with each example. Although an attempt has been made to outline some exemplary embodiments and exemplary variations thereto, other embodiments and/or variations are within the scope of the invention as defined in the claims below.

## Claims

1. A method in connection with a multiprocessor system comprising:
at least partially stalling execution of one or more system activities (365); and
dynamically modifying one or more routing tables (375) on one or more processors (110), wherein each one of the routing tables (114) represents a routing destination for an incoming data packet.

2. The method of claim 1, further comprising:
using the modified routing-tables to direct forwarding of the incoming packet to at least one outgoing link in the multiprocessor system.

3. The method of claim 1 or claim 2, further comprising:
identifying at least one substitute memory; and
updating a memory mapping to reflect the at least one substitute memory.

4. The method of claim 1, 2 or 3, further comprising:
identifying at least one substitute input/output link;
transferring input/output data to the substitute input/output link; and
updating an input/output map.

5. The method of claim 1, 2, 3 or 4, further comprising;
identifying at least one link for testing;
testing the identified link; and
wherein modifying the one or more routing tables (114) is based on results of the testing.

6. An apparatus comprising:
a plurality of processors (110); and
one or more storage units (120) coupled to each one of the processors (110), wherein each one of the processors (110) is coupled via at least one point to point link (105) and each processor (110) includes one or more routing tables (114) representing a routing destination for an incoming data packet and the processor (110) is configured to dynamically modify the routing tables (375) whilst at least partially stalling execution of one or more system activities (365).

7. A computer program produce, stored on at least one computer readable medium and comprising a set of instructions, the set of instructions configured to:
at least partially stall execution of one or more system activities. (365); and
dynamically modify one or more routing tables (375) on one or more processors (110), wherein each one of the routing tables (114) represents a routing destination for an incoming data packet.

8. The computer program product of claim 7, wherein the modified routing tables direct forwarding the incoming packet to at least one predetermined outgoing link in a multiprocessor system.

9. The computer program product of claim 7 or claim 8, wherein the set of instructions is further configured to:
identify at least one substitute memory; and
update a memory mapping.

10. The computer program product of claims 7, 8 or 9, wherein the set of instructions is further configured to:
identify at least one substitute input/output link;
transfer input/output data to the substitute input/output link; and
update an input/output map.

## Patentansprüche

1. Verfahren in Verbindung mit einem Multiprozessorsystem, wobei das Verfahren umfasst:
zumindest teilweise Blockieren der Ausführung einer oder mehrerer Systemaktivitäten (365); und
dynamisches Modifizieren einer oder mehrerer Routentabellen (375) in einem oder mehreren Prozessoren (110), wobei jede der Routentabellen (114) ein Routenziel für ein eintreffendes Datenpaket repräsentiert.

2. Verfahren nach Anspruch 1, das ferner umfasst:
Verwenden der modifizierten Routentabellen, um das Weiterleiten des eintreffenden Pakets zumindest zu einer nach außenführenden Verbindung in dem Multiprozessorsystern zu steuern.

3. Verfahren nach Anspruch 1 oder Anspruch 2, das ferner umfasst:
Ermitteln mindestens eines Substitutionsspeichers; und
Aktualisieren einer Speicherzuordnung, um den mindestens einen Substitutionsspeicher zu berücksichtigen.

4. Verfahren nach Anspruch 1, 2. oder 3, das ferner umfasst:
Ermitteln mindestens einer Substitutionseingabe/ausgabe-Verbindung;
Übertragen von Eingabe/Ausgabe-Daten zu der Substitutionseingabe/ausgabe-Verbindung; und
Aktualisieren einer Eingabe/Ausgabezuordnung.

5. Verfahren nach Anspruch 1, 2, 3 oder 4, das ferner umfasst:
Ermitteln mindestens einer Verbindung für Testzwecke;
Testen der ermittelten Verbindung; und
wobei das Modifizieren der einen oder mehreren Routentabellen (114) auf der Grundlage von Ergebnissen des Testens erfolgt.

6. Vorrichtung mit:
mehreren prozessoren (110); und
einer oder mehreren Speichereinheiten (120), die mit jedem der Prozessoren (110) verbunden sind, wobei jeder der Prozessoren (110) mit mindestens einer Punkt-zu-Punkt-Verbindung (105) angeschlossen ist und jeder Prozessor (110) eine oder mehrere Routentabellen (114) enthält, die ein Routenziel für ein eintreffendes Datenpaket reprasentieren, und wobei der Prozessor (110) ausgebildet ist, dynamisch die Routentabellen (375) zu modifizieren, wenn das Ausführen einer oder mehrerer Systemaktivitäten (365) zumindest teilweise blockiert wird.

7. Computerprogrammprodukt, das auf mindestens seinem computerlesbaren Medium gespeichert ist und eine Gruppe aus Befehlen aufweist, wobei die Gruppe aus Befehlen ausgebildet ist, um:
das Ausführen einer oder mehrerer Systemaktivitäten (365) zumindest teilweise zu blockieren; und
eine oder mehrere Routentabellen (375) in einem oder mehreren Prozessoren (110) dynamisch zu modifizieren, wobei jede der Routentabellen (114) ein Routenziel für ein eintreffenden Datenpaket repräsentiert.

8. Computerprogrammprodukt nach Anspruch 7, wobei die modifizierten Routentabellen das Weiterleiten des eintreffenden Pakets zu mindestens einer vorbestimmten nach außen führenden Verbindung in einem Mikroprozessorsystem steuern.

9. Computerprogrammprodukt nach Anspruch 7 oder Anspruch 8. wobei die Gruppe aus Befehlen ferner ausgebildet ist, um:
mindestens einen Substitutionsspeicher zu ermitteln; und
eine Speicherzuordnung zu aktualisieren.

10. Computerprogrammprodukt nach Anspruch 7, 8 oder 9, wobei die Gruppe aus Befehlen ferner ausgebildet ist, um
mindestens eine Substitutionseingabe/ausgabe-Verbindung zu ermitteln;
Eingabe/Ausgabe-Oaten zu der Substitutionseingabefausgabe-Verbindung zu übertragen; und
eine Eingabe/Ausgabe-Zuordnung zu aktualisieren.

## Revendications

1. Procédé en relation avec un système multiprocesseur comprenant :
le blocage, au moins partiellement, de l'exécution d'une ou de plusieurs activité(s) du système (365) ; et
la modification de façon dynamique d'une ou plusieurs table(s) de routage (375) sur un ou plusieurs processeur(s) (110), dans lequel chacune des tables de routage (114) représente une destination de routage relative à un paquet de données entrant.

2. Procédé selon la revendication 1 comprenant, de plus :
l'utilisation des tables de routage modifiées pour orienter la progression du paquet entrant vers au moins une liaison de sortie dans le système multiprocesseur.

3. Procédé selon la revendication 1 ou la revendication 2 comprenant, de plus :
l'identification d'au moins une mémoire de substitution ; et
l'actualisation d'une topographie de mémoire pour refléter la, au moins une, mémoire de substitution.

4. Procédé selon la revendication 1, 2 ou 3 comprenant, de plus :
l'identification d'au moins une liaison d'entrée/sortie de substitution ;
le transfert des données d'entrée/sortie vers la liaison d'entrée/sortie de substitution ; et
l'actualisation d'une configuration d'entrée/sortie.

5. Procédé selon la revendication 1, 2, 3 ou 4 comprenant, de plus :
l'identification d'au moins une liaison à tester ;
le test de la liaison identifiée ; et
dans lequel la modification d'une ou de plusieurs table(s) de routage (114) est fondée sur les résultats du test.

6. Dispositif comprenant :
une pluralité de processeurs (110) ; et
une ou plusieurs unité(s) de stockage (120) couplée(s) à chacun des processeurs (110), dans lequel chacun des processeurs (110) est couplé par l'intermédiaire d'au moins une liaison point à point (105) et dans lequel chaque processeur (110) comporte une ou plusieurs table(s) de routage (114) représentant une destination de routage correspondant à un paquet de données entrant et dans lequel le processeur (110) est configuré afin de modifier de façon dynamique les tables de routage (375) tout en bloquant, au moins partiellement, l'exécution d'une ou de plusieurs activité(s) du système (365).

7. Produit de programme informatique, stocké sur au moins un support pouvant être lu par ordinateur et comportant un ensemble d'instructions, l'ensemble d'instructions étant configuré pour :
bloquer au moins partiellement l'exécution d'une ou de plusieurs activité(s) du système (365) ; et
modifier de façon dynamique une ou plusieurs table(s) de routage (375) sur un ou plusieurs processeur(s) (110), dans lequel chacune des tables de routage (114) représente une destination de routage correspondant à un paquet de données entrant.

8. Produit de programme informatique selon la revendication 7, dans lequel les tables de routage modifiées orientent la progression du paquet entrant vers au moins une liaison de sortie prédéterminée dans un système multiprocesseur.

9. Produit de programme informatique selon la revendication 7 ou la revendication 8, dans lequel l'ensemble des instructions est configuré, de plus, pour:
identifier au moins une mémoire de substitution ; et
actualiser une topographie de mémoire.

10. Produit de programme informatique selon la revendication 7, 8 ou 9, dans lequel l'ensemble des instructions est configuré, de plus, pour :
identifier au moins une liaison d'entrée/sortie de substitution ;
transférer les données d'entrée/sortie vers la liaison d'entrée/sortie de substitution ; et
actualiser une configuration d'entrée/sortie.
